# EUROPÄISCHE PATENTSCHRIFT

(11) **EP 3 080 178 B1**
(45) Veröffentlichungstag und Bekanntmachung des Hinweises auf die Patenterteilung: **21.11.2018**
(21) Anmeldenummer: 13803008.5
(22) Anmeldetag: 12.12.2013
(51) Int. Cl.: C08G 12/00, C08L 61/00

(54) **FORMALDEHYD-FREIE HARZE BASIEREND AUF HYDROXYALDEHYDEN**
FORMALDEHYDE-FREE RESINS BASED ON HYDROXYL ALDEHYDES
RÉSINES EXEMPTES DE FORMALDÉHYDE À BASE D'HYDROXYALDÉHYDES

(43) Veröffentlichungstag der Anmeldung: 19.10.2016
(73) Patentinhaber: Fraunhofer-Gesellschaft zur Förderung der angewandten Forschung e.V., 80686 München (DE)
(72) Erfinder: BÖRNER, Frank, 13503 Berlin (DE); JOBMANN, Monika, 21614 Buxtehude (DE); HAHN, Mathias, 14552 Michendorf (DE)
(74) Vertreter: Maiwald Patent- und Rechtsanwaltsgesellschaft mbH
(86) Internationale Anmeldenummer: PCT/EP2013/076368
(87) Internationale Veröffentlichungsnummer: WO 2015/086074

(56) Entgegenhaltungen:
- EP-A2- 0 301 406
- WO-A1-2007/135108
- WO-A1-2011/161618
- WO-A1-2013/068255
- DE-A1- 3 831 421

## Beschreibung

Die vorliegende Erfindung betrifft ein Verfahren zur Herstellung eines Formaldehyd-freien Harzes sowie das durch dieses Verfahren erhältliche Harz.

Synthetische Harze oder Kunstharze sind relativ niedermolekulare, aushärtbare Materialien, die durch Umsetzung von Carbonylverbindungen (insbesondere Aldehyden wie Formaldehyd) mit Verbindungen, die NH-Gruppen oder OH-Gruppen aufweisen, gewonnen werden. Beispielhafte Harze sind Aminharze, Amidharze oder Harze aromatischer Hydroxyverbindungen (z.B. Phenolharze). Nach einer anschließenden Vernetzung (d.h. Aushärtung) des Harzes erhält man einen Duroplasten.

Als Komponenten mit Amin- oder Amidfunktionalität werden z. B. Harnstoff, Melamin, Benzoguanamin, Dicyandiamid und Acetylendiharnstoff eingesetzt, wobei insbesondere Harnstoff- und Melaminharze von technischer Bedeutung sind. Geeignete aromatische Hydroxyverbindungen für die Ausbildung von Harzen sind insbesondere Phenole. Als Aldehydkomponente kommt aufgrund seiner hohen Reaktivität und des niedrigen Rohstoffpreises vorzugsweise Formaldehyd zum Einsatz. Bei der Harzsynthese wird häufig mit einem Überschuss an Aldehyd gearbeitet, um die Reaktionen zwischen beiden Komponenten zu unterstützen. Entsprechend hoch sind die Restgehalte an Formaldehyd. Formaldehyd kann auch durch Hydrolyse der Polykondensate freigesetzt werden.

Nachteilig ist die von Formaldehyd ausgehende gesundheitliche Belastung. Formaldehyd ist zurzeit gemäß der europäischen Verordnung über die Einstufung, Kennzeichnung und Verpackung von Stoffen und Gemischen als Gefahrstoff mit krebserzeugenden Eigenschaften der Kategorie 2 eingestuft. Geplant ist eine Einstufung in die Kategorie 1B.

Aufgrund dieses Gefährdungspotenzials bemüht man sich seit vielen Jahren um eine Reduzierung des Formaldehydgehaltes. Hierfür wurden verschiedene Lösungsansätze gefunden und auch technisch umgesetzt. Hierzu zählen:
- Der Einsatz von Formaldehydfängern, die den freien Formaldehyd binden, wie z. B. Amine (Harnstoff, Melamin), Polyamine (Polyvinylamin, Polyethylenamin) oder Polyphenole (Tannin). Nachteilig sind hierbei allerdings z.B. eine verlangsamte Reaktionsgeschwindigkeit des Harzes und die negative Beeinflussung der mechanischen Eigenschaften (WO 2006/127818, WO 2006/134083, WO2008/068180).
- Die Reduzierung des Anteils an Formaldehyd bei der Harzsynthese (z.B. Molverhältnis 1: < 1 bei Einsatz von Harnstoff und Formaldehyd). Dies führt jedoch zu einer Verringerung der Harzreaktivität und letztlich auch zu einer Verschlechterung der mechanischen Eigenschaften und der Stabilität in Wasser (DE60125602).

Basierend auf diesen Maßnahmen ist es gelungen, den Formaldehydgehalt deutlich zu reduzieren. So konnte die Formaldehydemission aus Spanplatten, bei deren Herstellung Harnstoff-Formaldehyd-Harz als Bindemittel eingesetzt wurde, von ca. 100 ppm vor 1970 auf ca. 5 ppm im Jahr 2008 reduziert werden (EP2265684). Für Platten der Klasse E1 liegt Grenzwert zurzeit bei 0,1 ppm.

Aufgrund der aktuellen Diskussion zur Reklassifizierung von Formaldehyd ist jedoch zukünftig eine weitere Reduzierung der zulässigen Grenzwerte bzw. eine generelle Einschränkung der Einsatzgebiete von Produkten, in deren Herstellungskette Formaldehyd eingesetzt wird, zu erwarten.

Somit rücken Harzsysteme, die vollständig ohne Formaldehyd auskommen, wieder in den Vordergrund, auch wenn aus ökonomischer Sicht Formaldehyd der preiswerteste Aldehyd ist.

Der Ersatz von Formaldehyd durch andere Monoaldehyde ist bekannt.

Aminoharze auf der Basis reiner Glyoxylsäure liefern ebenfalls stabile Harze, bringen jedoch eine große Salzlast mit, da sie, um nicht auszuhärten, vor der Synthese zu den Aminoharzen mit einer Base neutralisiert werden müssen. Diese Salze nehmen leicht Wasser auf und führen bei der Anwendung (z.B. in Holzwerkstoffen) zu einer erhöhten Quellbarkeit der Endprodukte. Da die Säuregruppe mit Calciumionen wasserunlösliche Salze bildet, werden solche Systeme aber als Betonverfestiger und Fließhilfsmittel in der Bauindustrie eingesetzt (z.B. US 2008/108732, DE 2004050395, US 5750634, US 5891983).

In US2010/0247941 und US2006/0093843 werden Aminoharze auf der Basis von Dimethoxyglyoxal (auch als Dimethoxyethanal bezeichnet) beschrieben. Diese Harze sollen als Leime bei der Herstellung von Holzwerkstoffen eingesetzt werden. Diese Harze sind allerdings relativ unreaktiv, was z.B. bei der Holzwerkstoffherstellung zu langen Presszeiten führt.

Harze auf Basis von Dimethoxyglyoxal und Melamin werden auch für den Einsatz bei der Mikroverkapselung von Duftstoffen beschrieben (WO2013/068255, WO2009/100553, WO2011/161618).

Dialdehyde wie z.B. Glyoxal liefern schon bei der leicht basischen Anlagerung an Harnstoff, Melamin, Benzoguanamin, Acetylendiharnstofff bzw. Dicyandiamid unlösliche vernetzte Gelstrukturen. Aufgrund dieser Selbstvernetzung schon bei der Anlagerung und der daraus resultierenden hohen Viskositäten haben derartige Harze keine technische Relevanz.

In DE 3041580 wird bei der Harzsynthese ein alkylierter Harnstoff eingesetzt, so dass die möglichen Umsetzungen am Amid reduziert werden. Die Amidgruppen werden durch Alkylgruppen geschützt, bevor Glyoxal angelagert wird. Diese Harze werden in hochverdünnten Lösungen als Knitterfestausführung in der Textilindustrie eingesetzt.

DE 38 31 421 A1 beschreibt eine Zusammensetzung zur Entklebung un Klärung von Abwässern saurer und alkalischer Farben und Lacke und Farbabfällen aus Spritzkabinen, wobei die Zusammensetzung eine anorganisch-organische und/oder organische Polymerlegierungs-Addukt-Zusammensetzung umfasst.

EP 0 301 406 A2 beschreibt Kondensationsprodukte aus Melamin, Glyoxylsäure und Glyoxal als Gerbereihilfsmittel, erhalten durch Kondensation von 1 Mol Melamin mit 1 bis 5 Mol Glyoxylsäure oder einem Alkalisalz der Glyoxylsäure und 1 bis 5 Mol Glyoxal.

Wie beschrieben, stehen prinzipiell weitere Aldehyde als Alternativen zum Formaldehyd bei der Harzsynthese zur Verfügung. Dabei ist jedoch zu berücksichtigen, dass die bekannten Systeme entweder nicht reaktiv genug sind, oder bei Einsatz dieser Harze nicht das für die Endprodukte gewünschte Eigenschaftsprofil erhalten werden kann (Festigkeit, Steifigkeit bzw. Beständigkeit). Bei der Verwendung von Dialdehyden wie Glyoxal stellt sich wiederum das Problem, dass sich bereits bei der Anlagerung des Dialdehyds an das Amin oder Amid vernetzte Strukturen bilden.

Der Erfindung liegt die Aufgabe zugrunde, Formaldehyd-freie Harze bereit zu stellen, die einerseits lagerstabil sind, sich andererseits aber unter Einstellung entsprechender Aushärtungsbedingungen gut dreidimensional vernetzen lassen und dabei Endprodukte liefern, die hinsichtlich Festigkeit, Steifigkeit oder Beständigkeit das gewünschte Eigenschaftsprofil aufweisen. Eine weitere Aufgabe der vorliegenden Erfindung liegt in der Bereitstellung eines Verfahrens zur Herstellung eines Formaldehyd-freien Harzes, das den oben genannten Anforderungen gerecht wird.

Gemäß eines ersten Aspekts der vorliegenden Erfindung wird das Problem gelöst durch ein Verfahren zur Herstellung eines Formaldehyd-freien Harzes, in dem ein Hydroxy-Monoaldehyd mit einem Amin, Amid oder einer aromatischen Hydroxyverbindung umgesetzt wird, wobei der Hydroxy-Monoaldehyd Glycolaldehyd oder Glycerinaldehyd oder ein Gemisch dieser Aldehyde ist.

Glycolaldehyd oder Glycerinaldehyd können über herkömmliche, dem Fachmann bekannte Syntheseverfahren hergestellt werden oder sind kommerziell erhältlich.

Glykolaldehyd wird beispielsweise als Dimer kommerziell angeboten, allerdings zu einem relativ hohen Einkaufspreis. Dieses Dimer kann durch basisch katalysierte Ringöffnung zur Harzsynthese verwendet werden.

Glycolaldehyd oder Glycerinaldehyd können beispielsweise durch eine katalytische Umpolungsreaktion aus Formaldehyd oder einer Formaldehyd-Quelle (z.B. Paraformaldehyd) erhalten werden (Carbonyl-Umpolung). Wie dem Fachmann bekannt ist, handelt es sich bei einer Umpolung um eine chemische Reaktion, bei der eine Verbindung, die eine funktionelle Gruppe enthält, modifiziert wird mit dem Ziel, deren Polarität umzukehren. Eine solche katalytische Umpolungsreaktion des Formaldehyds zur Herstellung von Hydroxy-C₂₋₃-Monoaldehyden ist beispielsweise in DE 42 12 264 beschrieben.

Bei einer solchen katalytischen Umpolung von Formaldehyd zu einem Hydroxy-C₂₋₃-Monoaldehyd können als Nebenprodukte auch Hydroxyaldehyde mit 4 oder mehr Kohlenstoffatomen entstehen. Deren Reaktivität gegenüber Aminen, Amiden oder Hydroxyverbindungen bei der Harzsynthese ist jedoch im Vergleich zu Hydroxy-C₂₋₃-Monoaldehyden geringer, so dass es erwünscht sein kann, die Bildung von Hydroxyaldehyden mit 4 oder mehr C-Atomen möglichst zu minimieren.

Andererseits sollte dies nicht auf Kosten der Reaktionsgeschwindigkeit für die Bildung des Hydroxy-C₂₋₃-Monoaldehyds erreicht werden.

Glycolaldehyd und/oder Glycerinaldehyd können bevorzugt in einer katalytischen Umpolungsreaktion erhalten werden, die folgende Schritte umfasst:
(i) Bereitstellung einer Reaktionslösung, die ein organisches Lösungsmittel, Formaldehyd und/oder Paraformaldehyd, und einen Katalysator enthält,
(ii) Erwärmen der Reaktionslösung unter Ausbildung des Glycolaldehyds und/oder Glycerinaldehyds,
(iii) in Kontakt bringen der Reaktionslösung mit einer wässrigen Phase.

Sobald die Reaktionslösung mit der wässrigen Phase in Schritt (iii) in Kontakt gebracht wird, ist es bevorzugt, dass keine Erwärmung der Reaktionslösung durch eine äußere Heizquelle mehr stattfindet.

Die wässrige Phase, mit der die Reaktionslösung in Kontakt gebracht wird, kann beispielsweise eine Temperatur von 30°C oder weniger aufweisen. Bei der wässrigen Phase kann es sich auch um gefrorenes Wasser (d.h. Eis) handeln.

Dadurch, dass die Reaktionslösung nach der Ausbildung des Glycolaldehyds und/oder Glycerinaldehyds mit der wässrigen Phase in Kontakt gebracht wird, kann die weitergehende Reaktion zu Hydroxyaldehyden mit 4 oder mehr C-Atomen unterdrückt werden. Aufgrund ihrer guten Löslichkeit gehen Glycolaldehyd und/oder Glycerinaldehyd in Schritt (iii) in die wässrige Phase über, während der Umpolungskatalysator in dem organischen Lösungsmittel verbleibt. Der Umpolungskatalysator wäre auch bei Raumtemperatur noch ausreichend katalytisch aktiv, um eine weitere Reaktion zu Produkten mit 4 oder mehr C-Atomen zu katalysieren. Diese räumliche Trennung von Umpolungskatalysator und Hydroxy-C₂₋₃-Monoaldehyd trägt somit dazu bei, eine weitere Reaktion zu Produkten mit 4 oder mehr C-Atomen zu unterbinden.

Das in Kontakt bringen der Reaktionslösung mit der wässrigen Phase kann auf übliche Weise erfolgen, z.B. dadurch, dass die Reaktionslösung auf die wässrige Phase gegossen wird (oder umgekehrt).

Bevorzugt handelt es sich bei der Reaktionslösung in den Schritten (i) und (ii) um eine einphasige Reaktionslösung. Bevorzugt ist der Wassergehalt der Reaktionslösung relativ gering (z.B. weniger als 10 Vol% oder weniger als 5 Vol%, bezogen auf das Volumen des organischen Lösungsmittels bzw. der organischen Lösungsmittel) oder die Reaktionslösung ist sogar wasserfrei. Der Begriff "einphasige Reaktionslösung" schließt in dieser bevorzugten Ausführungsform für die Schritte (i) und (ii) die Anwesenheit einer separaten wässrigen Phase aus.

Die Auswahl eines geeigneten organischen Lösungsmittels kann der Fachmann ohne weiteres auf der Basis seines allgemeinen Fachwissens vornehmen. Es können sowohl protische wie auch aprotische organische Lösungsmittel verwendet werden. In einer bevorzugten Ausführungsform wird ein aprotisches Lösungsmittel oder ein Gemisch aprotischer Lösungsmittel verwendet. Als geeignete organische Lösungsmittel können z.B. Alkohole wie C₁₋₄-Alkohole, Essigsäureethylester, Pyridin, Aceton, cyclische Ether (1,4-Dioxan / THF) und nicht-cyklische Ether (z.B. Dipropylether, Dibutylether, Diglyme) genannt werden.

Die Auswahl eines geeigneten Katalysators für die Umpolungsreaktion von Formaldehyd kann der Fachmann ebenfalls auf der Basis seines allgemeinen Fachwissens vornehmen. Geeignete Umpolungskatalysatoren werden beispielsweise in DE 42 12 264 A1 beschrieben.

Bevorzugte Katalysatoren für die Umpolungsreaktion von Formaldehyd sind beispielsweise mesoionische Triazolium- oder Tetrazoliumverbindungen. In einer bevorzugten Ausführungsform wird Nitron (1,4-Diphenyl-4H-[1,2,4]triazol-3-yl)-phenylamin) als Katalysator verwendet.

Kommerziell erhältlicher Paraformaldehyd kann Ameisensäure enthalten. Da der Umpolungskatalysator in Anwesenheit einer Säure deaktiviert werden könnte, erfolgt in Schritt (i) und/oder Schritt (ii) bevorzugt die Zugabe einer Base. Deren Basizität sollte dabei bevorzugt nicht zu stark sein, da ansonsten eine Cannizzaro-Reaktion eintreten kann. Als geeignete Basen können beispielsweise Carbonate, tert. Amine, oder Anionenaustauscher genannt werden.

Wenn in den Schritten (i) und (ii) eine einphasige Reaktionslösung verwendet wird, kann im Vergleich zu einem zweiphasigen Reaktionsmedium (Phasentransfer-Reaktion) eine höhere Reaktionsgeschwindigkeit realisiert werden. Sobald sich in diesem einphasigen Reaktionsmedium dann der Glycolaldehyd und/oder Glycerinaldehyd gebildet hat, kann die weitergehende Umsetzung zu Hydroxyaldehyden mit 4 oder mehr C-Atomen durch ein in Kontakt bringen mit einer wässrigen Phase in Schritt (iii) unterbunden werden.

Wie oben bereits erwähnt, gehen Glycolaldehyd und/oder Glycerinaldehyd aufgrund ihrer guten Wasserlöslichkeit in Schritt (iii) in die wässrige Phase über. Gegebenenfalls kann die Reaktionslösung noch mehrmals mit Wasser ausgeschüttelt bzw. gewaschen werden, um die Ausbeute an Glycolaldehyd und/oder Glycerinaldehyd weiter zu verbessern. Nach dem Abtrennen von der Reaktionslösung kann diese wässrige Phase für die Harzsynthese eingesetzt werden. Zur Verbesserung der Lagerstabilität wird der pH-Wert der wässrigen Phase bevorzugt auf einen Wert von 5,5 ± 2, bevorzugter 5,5 ± 0,5 eingestellt. In einer solchen wässrigen Phase ist der Glycolaldehyd und/oder Glycerinaldehyd über Monate stabil.

Sofern bei der oben beschriebenen Synthese ein Gemisch aus Glycolaldehyd und Glycerinaldehyd erhalten wird, können diese Aldehyde über gängige, dem Fachmann geläufige Trennverfahren (z.B. Chromatographie) voneinander separiert werden, so dass in der anschließenden Harzsynthese das Amin, das Amid oder die aromatische Hydroxyverbindung nur mit einem bestimmten Hydroxy-C₂₋₃-Monoaldehyd umgesetzt wird. Alternativ ist es auch möglich, das Gemisch aus Glycolaldehyd und Glycerinaldehyd direkt für die Harzsynthese zu verwenden, ohne dabei die vorteilhaften Eigenschaften wie z.B. hohe Lagerstabilität des Harzes zu verlieren.

Bei dem Amin, dem Amid oder der aromatischen Hydroxyverbindung, das bzw. die mit dem Hydroxy-Monoaldehyd zur Herstellung eines Formaldehyd-freien Harzes umgesetzt wird, kann es sich um solche handeln, die üblicherweise für die Herstellung von Harzen verwendet werden.

Das Ausgangsamin oder Ausgangsamid kann beispielsweise 2-3 Amin- bzw. Amidgruppen aufweisen (d.h. Diamin bzw. Diamid oder Triamin bzw. Triamid). Es können im Rahmen der vorliegenden Erfindung aber auch Amine oder Amide mit mehr als 3 Amin- bzw. Amidgruppen verwendet werden.

Als Amin oder Amid kommt beispielsweise ein Aminotriazin, Harnstoff, ein Harnstoffderivat, Thioharnstoff, ein Thioharnstoffderivat, Iminoharnstoff (d.h. Guanidin), ein Iminoharnstoffderivat, ein Cyanamid, ein Diaminoalkan, ein Diamidoalkan, ein Polyacrylamid oder ein Gemisch dieser Verbindungen in Frage. Ferner können pflanzliche/tierische Amine/Amide (wie z. B. Proteine, Gelatine) eingesetzt werden.

Geeignete Aminotriazine sind insbesondere Amino-1,3,5-triazine wie z.B. Melamin, Acetoguanamin und Benzoguanamin. Als geeignete Harnstoffderivate können beispielsweise alkylierte Harnstoffe wie Methylharnstoff oder cyclische Harnstoffe wie Acetylendiharnstoff oder Ethylenharnstoff genannt werden. Als geeignete Thioharnstoffderivate können beispielsweise cyclische Thioharnstoffe wie Ethylenthioharnstoff genannt werden. Als geeignete Iminoharnstoffderivate können beispielsweise cyclische Iminoharnstoffe genannt werden. Als geeignetes Cyanamid kann beispielsweise Dicyandiamid oder Cyanamid genannt werden. Als geeignete Diaminoalkane können beispielsweise Diamino-C₁₋₈-Alkane genannt werden. Als geeignete Diamidoalkane können beispielsweise Diamido-C₁₋₈-Alkane genannt werden.

Geeignete aromatische Hydroxyverbindungen sind beispielsweise Phenol oder Phenolverbindungen mit mindestens zwei Hydroxygruppen. Als bevorzugte Phenolverbindungen mit mindestens zwei Hydroxygruppen können beispielsweise Brenzcatechin, Resorcin, Hydrochinon, Phloroglucin, Hydroxyhydrochinon, Pyrogallol oder ein Gemisch von mindestens zwei dieser Phenolverbindungen genannt werden.

Sofern die Harzsynthese mit einem Amin oder Amid erfolgt, kann das molare Verhältnis des Hydroxy-Monoaldehyds zu den Amingruppen des Amins oder den Amidgruppen des Amids über einen breiten Bereich variiert werden.

Weist das Amin oder Amid beispielsweise 3 Amin- bzw. Amidgruppen auf, so liegt das molare Verhältnis des Hydroxy-Monoaldehyds zu den Amingruppen des Amins oder den Amidgruppen des Amids bevorzugt im Bereich von 0,5/3 bis 3/3, bevorzugter 1,5/3 bis 2,5/3 oder 1,8/3 bis 2,2/3. Weist das Amin oder Amid beispielsweise 2 Amin- bzw. Amidgruppen auf, so liegt das molare Verhältnis des Hydroxy-Monoaldehyds zu den Amingruppen des Amins oder den Amidgruppen des Amids bevorzugt im Bereich von 0,2/2 bis 2/2, bevorzugter 0,3/2 bis 1,5/2, noch bevorzugter 0,5/2 bis 1,5/2.

Sofern die Harzsynthese mit einer aromatischen Hydroxyverbindung erfolgt, kann das molare Verhältnis des Hydroxy-Monoaldehyds zu der aromatischen Hydroxyverbindung über einen breiten Bereich variiert werden.

Weist die aromatische Hydroxyverbindung beispielsweise 3 Hydroxygruppen auf, so liegt das molare Verhältnis des Hydroxy-Monoaldehyds zu der aromatischen Hydroxyverbindung bevorzugt im Bereich von 0,5/1 bis 1/3, bevorzugter 1/1 bis 1/2. Weist die aromatische Hydroxyverbindung beispielsweise 2 Hydroxygruppen auf, so liegt das molare Verhältnis des Hydroxy-Monoaldehyds zu der aromatischen Hydroxyverbindung bevorzugt im Bereich von 0,5/1 bis 1/4, bevorzugter 1/1 bis 1/2.

In dem erfindungsgemäßen Verfahren ist es prinzipiell möglich, dass jede Amingruppe des Ausgangsamins oder jede Amidgruppe des Ausgangsamids oder bei Phenolen jede Ringposition des aromatischen Rings, die in ortho- oder para-Position zu der OH-Gruppe steht (nachfolgend auch als reaktive Ringpositionen der aromatischen Hydroxyverbindung bezeichnet), mit zumindest einem Monoaldehyd reagiert. Alternativ kann es jedoch bevorzugt sein, dass zumindest eine Amingruppe des Amins oder eine Amidgruppe des Amids oder eine reaktive Ringposition der aromatischen Hydroxyverbindung nicht mit dem Monoaldehyd umgesetzt wird.

Wie nachfolgend noch ausführlicher beschrieben wird, kann in einer bevorzugten Ausführungsform das aus der Umsetzung des Hydroxy-Monoaldehyds mit dem Amin, dem Amid oder der aromatischen Hydroxyverbindung erhaltene Produkt anschließend mit einem weiteren Aldehyd, bevorzugt einem Dialdehyd oder einem Trialdehyd umgesetzt werden. In einer bevorzugten Ausführungsform erhält man dadurch ein Harz, das noch freie Aldehydgruppen aufweist. Wenn also nach der Umsetzung des Hydroxy-Monoaldehyds mit dem Amin, dem Amid oder der aromatischen Hydroxyverbindung noch freie Amin- oder Amidgruppen oder reaktive Ringpositionen vorhanden sind, wären diese in einem nachfolgenden Umsetzungsschritt unmittelbar für eine Reaktion mit dem Dialdehyd oder Trialdehyd zugänglich. Geeignete Verfahrensbedingungen, um dies sicherzustellen, sind dem Fachmann bekannt. Beispielsweise kann der Monoaldehyd im molaren Unterschuss, bezogen auf die Anzahl der Amingruppen des Amins oder der Amidgruppen des Amids oder die molare Menge der aromatischen Hydroxyverbindung, zugegeben werden.

Geeignete Lösungsmittel für die Umsetzung des Hydroxy-Monoaldehyds mit dem Amin, dem Amid oder der aromatischen Hydroxyverbindung sind dem Fachmann grundsätzlich bekannt. Bevorzugt wird ein wässriges Lösungsmittel verwendet. Ferner können Wasserstoffbrücken-brechende polare Lösungsmittel eingesetzt werden.

Geeignete Reaktionsbedingungen (wie z.B. Reaktionstemperatur und pH-Wert) für die Umsetzung des Hydroxy-Monoaldehyds mit dem Amin, dem Amid oder der aromatischen Hydroxyverbindung sind dem Fachmann grundsätzlich bekannt.

Die Reaktionstemperatur kann beispielsweise im Bereich von 20°C bis 100°C, bevorzugter im Bereich von 40 bis 65°C liegen. In Abhängigkeit von dem Amin oder dem Amid oder der aromatischen Hydroxyverbindung und dem verwendeten Monoaldehyd kann der pH-Wert über einen breiten Bereich variieren. Der pH-Wert kann beispielsweise im Bereich von 6 bis 10, bevorzugter 7 bis 8,5 liegen.

Mit dem erfindungsgemäßen Verfahren werden Oligomere mit sehr kurzen Sequenzen gebildet. Diese Harze können auch noch bei hohen Feststoffanteilen (z.B. 60 Gew%) problemlos stabilisiert werden (d.h. hohe Lagerstabilität). Die Zugabe stabilisierender Additive ist nicht erforderlich. Das erfindungsgemäße Harz kann beispielsweise einen Feststoffgehalt von mindestens 40 Gew% oder sogar mindestens 55 Gew% aufweisen. Das Harz kann dabei frei von polymeren Additiven sein.

In einer bevorzugten Ausführungsform wird das aus der Umsetzung des Hydroxy-Monoaldehyds mit dem Amin, dem Amid oder der aromatischen Hydroxyverbindung erhaltene Produkt anschließend mit einem weiteren Aldehyd umgesetzt, wobei der Aldehyd ein Dialdehyd, ein Trialdehyd, ein Monoaldehyd wie Glyoxylsäure, oder ein Gemisch von mindestens zwei dieser Aldehyde ist.

In dieser bevorzugten Ausführungsform wurde festgestellt, dass sich lagerstabile Harze auch mit Dialdehyden oder Trialdehyden herstellen lassen, wenn das Amin oder Amid oder die aromatische Hydroxyverbindung zunächst mit dem Hydroxy-Monoaldehyd umgesetzt wird. In bekannter Weise reagiert dabei die Aldehydgruppe mit dem Stickstoff der Amin- bzw. Amidgruppe oder mit einer reaktiven Ringposition (d.h. einer Position des aromatischen Rings, die in ortho- oder para-Position zu der OH-Gruppe steht) der aromatischen Hydroxyverbindung. Der als Folge dieser Reaktion an das Stickstoffatom der Amin- oder Amidgruppe oder den aromatischen Ring kovalent gebundene und sich aus dem Hydroxy-Monoaldehyd ableitende Rest fungiert dann als Schutzgruppe, die in dem nachfolgenden Verfahrensschritt verhindert, dass es bei der Umsetzung mit dem Dialdehyd oder Trialdehyd zu einer unerwünschten signifikanten Vernetzung kommt.

Da bei der Anlagerung eines Aldehyds z.B. an ein Amin oder Amid gemäß der Reaktionsgleichung

-NHR + OHC- → -NR-CH(OH)-

die Aldehydgruppe in eine Halbacetalgruppe überführt wird und diese Halbacetalgruppe eine reaktive Gruppe darstellt, die für eine spätere Vernetzungsreaktion genutzt werden kann, wird in diesem ersten Reaktionsschritt eine "reaktive Schutzgruppe" an der Amin- oder Amingruppe angebracht (d.h. eine Gruppe, die einerseits in einer nachfolgenden Umsetzung mit einem Di- oder Trialdehyd zunächst eine unerwünschte vorzeitige Vernetzung verhindert, andererseits aber eine reaktive Gruppe aufweist, die später die erwünschte Vernetzung bzw. Aushärtung zu einem vernetzten Material unterstützen kann). Da der Hydroxy-Monoaldehyd selbst bereits eine Hydroxygruppe enthält, weist somit die reaktive Schutzgruppe zwei OH-Gruppen auf. Beide OH-Gruppen können für eine spätere Vernetzungsreaktion vorteilhaft sein.

In dieser bevorzugten Ausführungsform sind nach dem ersten Schritt also zunächst ein oder mehrere Amingruppen des Amins oder Amidgruppen des Amids oder eine oder mehrere Positionen des aromatischen Phenolringes durch eine sich aus dem Hydroxy-Monoaldehyd ableitende reaktive Schutzgruppe blockiert. Wird nun in einem weiteren Schritt der Dialdehyd oder Trialdehyd zugegeben, kann dieser zunächst nur mit N-Atomen oder solchen reaktiven Positionen des aromatischen Ringes reagieren, die im ersten Schritt noch nicht mit einer Schutzgruppe blockiert wurden. Da die Reaktion des Hydroxy-Monoaldehyds mit dem Amin oder Amid im ersten Schritt eine Gleichgewichtsreaktion ist, kann der Dialdehyd oder Trialdehyd im zweiten Schritt außerdem die sich aus dem Hydroxy-Monoaldehyd ableitenden Schutzgruppen teilweise ersetzen.

In einer bevorzugten Ausführungsform weist das Harz freie Aldehydgruupen auf. Die Anwesenheit freier Aldehydgruppen kann die Reaktivität bei der Einstellung geeigneter Bedingungen erhöhen und somit die Herstellung eines vernetzten Endprodukts unterstützen.

Durch die im zweiten Schritt noch mögliche Umsetzung des Dialdehyds oder Trialdehyds mit dem Stickstoff des Amins bzw. Amids können zwar einerseits gemäß der Reaktionsgleichung

-NHR + OHC-R-CHO → -NR-CH(OH)-R-CHO

freie Aldehydgruppen entstehen, eine signifikante vorzeitige (und daher unerwünschte) Vernetzung findet jedoch nicht statt. Gleiches gilt auch für die Harze auf der Basis einer aromatischen Hydroxyverbindung.

Die Reaktivität des Harzes wird auch durch die Anwesenheit der reaktiven Schutzgruppe erhöht. Wie bereits oben erläutert, enthält der sich aus dem Hydroxy-Monoaldehyd ableitende und als Schutzgruppe für die Amin- oder Amidgruppe oder die aromatische Ringposition fungierende Rest zwei reaktive OH-Gruppen (davon eine Halbacetalgruppe), die bei Einstellung entsprechender Bedingungen für eine spätere Vernetzungsreaktion zur Verfügung steht.

Mit Aminen oder Amiden oder aromatischen Hydroxyverbindungen umsetzbare Dialdehyde oder Trialdehyde sind dem Fachmann an sich bekannt.

Beispielhaft können in diesem Zusammenhang Glyoxal oder ein Dialdehyd der Formel OHC-(CH₂)₁₋₃-CHO (d.h. Malonaldehyd, Succindialdehyd, Glutaraldehyd) genannt werden.

Als geeigneter Trialdehyd kann beispielsweise 2,4,6-Tris(p-formylphenoxy)-1,3,5-triazin genannt werden.

Im Rahmen der vorliegenden Erfindung ist es möglich, dass der Dialdehyd oder Trialdehyd dem Produkt aus dem ersten Schritt, welches bevorzugt in einer wässrigen Lösung vorliegt, zudosiert wird. Alternativ ist es auch möglich, dass das Produkt aus dem ersten Schritt (z.B. in Form einer wässrigen Lösung) dem Dialdehyd oder Trialdehyd zudosiert wird. In beiden Fällen ist es bevorzugt, dass die eine Komponente der anderen Komponente kontinuierlich zudosiert wird. Während im ersten Fall ausreichend langsam zudosiert wird, so dass sich im Reaktionsmedium während der Umsetzung immer nur eine geringe Konzentration an nicht umgesetztem Dialdehyd oder Trialdehyd befinden, wird im Fall gut wasserlöslicher Produkte zügig zudosiert, um nach der Reaktion das Harz durch Abkühlung zu stabilisieren.

Sofern eine Reaktion mit einem weiteren Aldehyd erfolgt, wird das Produkt aus dem ersten Schritt bevorzugt nicht isoliert, sondern in Form der wässrigen Lösung, in der es im ersten Schritt hergestellt wurde, für die Umsetzung mit dem Dialdehyd oder Trialdehyd im zweiten Schritt verwendet.

Die Menge an Dialdehyd oder Trialdehyd, die im zweiten Schritt zugegeben wird, kann über einen breiten Bereich variiert werden.

Weist das Amin oder Amid 3 Amin- bzw. Amidgruppen auf, so liegt das molare Verhältnis des Dialdehyds oder Trialdehyds zu den Amingruppen oder Amidgruppen bevorzugt im Bereich von 0,1/3 bis 5/3, bevorzugter 0,5/3 bis 3/3 oder 0,8/3 bis 2,2/3. Weist das Ausgangsamin oder Ausgangsamid 2 Amin- bzw. Amidgruppen auf, so liegt das molare Verhältnis des Dialdehyds oder Trialdehyds zu den Amingruppen oder Amidgruppen bevorzugt im Bereich von 0,1/3,9 bis 3,9/0,1, bevorzugter 0,3/1,7 bis 1,7/0,3, noch bevorzugter 0,5/1,5 bis 1,5/0,5.

Weist das Amin oder Amid zwei Amin- oder Amidgruppen auf, so kann das molare Verhältnis des im zweiten Schritt zugegebenen Dialdehyds oder Trialdehyds zu dem im ersten Schritt zugegebenen Hydroxy-Monoaldehyd beispielsweise im Bereich von 1/0,01 bis 1/3 oder 1/0,2 bis 1/2 oder auch 1/0,5 bis 1/1,5 liegen. Weist das Amin oder Amid drei Amin- oder Amidgruppen auf, so kann das molare Verhältnis des im zweiten Schritt zugegebenen Dialdehyds oder Trialdehyds zu dem im ersten Schritt zugegebenen Hydroxy-Monoaldehyd beispielsweise im Bereich von 1/0,01 bis 1/5 oder 1,5/0,2 bis 1,5/2 oder auch 2/0,3 bis 2/1 liegen.

Weist die aromatische Hydroxyverbindung 3 Hydroxygruppen auf, so liegt das molare Verhältnis des Dialdehyds oder Trialdehyds zu der aromatischen Hydroxyverbindung bevorzugt im Bereich von 1/0,1 bis 1/2,5, bevorzugter 1/0,1 bis 1/1,5. Weist die aromatische Hydroxyverbindung 2 Hydroxygruppen auf, so liegt das molare Verhältnis des Dialdehyds oder Trialdehyds zu der aromatischen Hydroxyverbindung bevorzugt im Bereich von 1/0,1 bis 1/3,5, bevorzugter 1/0,1 bis 1/2.

Geeignete Reaktionsbedingungen (wie z.B. Reaktionstemperatur und pH-Wert) für die Umsetzung eines Amins oder Amids oder einer aromatischen Hydroxyverbindung mit dem Dialdehyd oder Trialdehyd sind dem Fachmann grundsätzlich bekannt.

Die Reaktionstemperatur im zweiten Schritt kann beispielsweise im Bereich von 20°C bis 100°C, bevorzugter von 40°C bis 65°C liegen. Der pH-Wert kann beispielsweise im Bereich von 6 bis 10, bevorzugter 7 bis 8,5 liegen.

In dieser bevorzugten Ausführungsform (d.h. Umsetzung mit einem weiteren Aldehyd, insbesondere einem Di- oder Trialdehyd, in einem zweiten Schritt) können Oligomere mit sehr kurzen Sequenzen gebildet werden und die Harze können auch noch bei hohen Feststoffanteilen (z.B. 60 Gew%) problemlos stabilisiert werden. Auch bei den gut löslichen Verbindungen wie Harnstoff oder Guanidin bleiben die Reaktionsprodukte durch die sich aus dem Hydroxy-Monoaldehyd ableitende reaktive Schutzgruppe so niedrig viskos, dass eine Stabilisierung auch bei hohen Feststoffanteilen sehr gut möglich ist.

Weiterhin zeichnet sich das Harz in einer bevorzugten Ausführungsform dadurch aus, dass es freie Aldehydgruppen aufweist, die die Reaktivität bei der Einstellung geeigneter Bedingungen erhöhen und somit die Herstellung eines vernetzten Endprodukts unterstützen.

Die Reaktivität des Harzes wird auch durch die Anwesenheit der reaktiven Schutzgruppe erhöht.

Damit wird eine Reaktivität erreicht, die derjenigen von Harzen auf Formaldehydbasis entspricht oder diese sogar übertrifft.

Die hergestellten Harze können stabilisiert werden, beispielsweise durch
- Abkühlen (z.B. auf eine Temperatur unterhalb von 30°C, bevorzugter unterhalb von 25°C) und/oder
- Zusatz von Alkoholen und/oder
- Einstellen des pH auf einen Wert im Bereich von 7,0-9,0, bevorzugter 7,5-8,5.

Gemäß einem weiteren Aspekt betrifft die vorliegende Erfindung ein Verfahren zur Herstellung eines vernetzten Materials, umfassend
- die Bereitstellung eines Formaldehyd-freien Harzes gemäß des oben beschriebenen Verfahrens und
- die Vernetzung bzw. Aushärtung des Harzes.

Geeignete Bedingungen für die Vernetzung eines Harzes zur Herstellung eines vernetzten Materials sind dem Fachmann grundsätzlich bekannt.

Vernetzte Materialien werden auch als Duroplasten bezeichnet.

Die Anwesenheit freier primärer Amidgruppen kann die Reaktivität des Harzes erhöhen. In einer bevorzugten Ausführungsform wird daher dem Formaldehyd-freien Harz vor und/oder während der Vernetzung Harnstoff oder Polyamid oder Polyacrylamid (bevorzugt jeweils in Form einer Lösung) zugegeben. Bevorzugt erfolgt die Zugabe des Amids in einer Menge, so dass die Anzahl der freien primären Amidgruppen geringer ist als die Anzahl der freien Aldehyd-Gruppen.

Gemäß eines weiteren Aspekts betrifft die vorliegende Erfindung ein Formaldehyd-freies Harz, das durch das oben beschriebene Verfahren erhältlich ist, also durch Umsetzung eines Hydroxy-Monoaldehyds mit einem Amin oder einem Amid oder einer aromatischen Hydroxyverbindung, wobei der Hydroxy-Monoaldehyd Glycolaldehyd oder Glycerinaldehyd oder ein Gemisch dieser Aldehyde ist.

Hinsichtlich bevorzugter Amine, Amide oder aromatischer Hydroxyverbindungen kann auf die oben gemachten Ausführungen verwiesen werden.

Bevorzugt weist das Harz freie Aldehydgruppen auf.

In einer bevorzugten Ausführungsform sind in dem erfindungsgemäßen Harz vorhanden:
- Amingruppen oder Amidgruppen oder aromatische Ringe, an die Reste gebunden sind, die sich von der Umsetzung mit dem Hydroxy-Monoaldehyd aus dem ersten Schritt ableiten, also die reaktive Schutzgruppe,
- sowie Amingruppen oder Amidgruppen oder aromatische Ringe, an die Reste gebunden sind, die sich von der Umsetzung mit dem Dialdehyd oder Trialdehyd im zweiten Schritt ableiten und in einer bevorzugten Ausführungsform freie Aldehydgruppen aufweisen können.

Der Feststoffgehalt des Harzes kann über einen breiten Bereich variiert werden. Der Feststoffgehalt beträgt mindestens 40 Gew%. Bevorzugt liegt die Konzentration bzw. der Feststoffgehalt des Harzes im Bereich von 40 bis 80 Gew% oder 55 bis 70 Gew%. Das erfindungsgemäße Harz zeigt auch noch bei hohem Feststoffgehalt eine gute Lagerstabilität. Stabilisierende Zusätze sind nicht erforderlich. Bevorzugt enthält das Harz kein polymeres Additiv.

Gemäß eines weiteren Aspekts betrifft die vorliegende Erfindung einen vernetzten Materials, erhältlich aus dem oben beschriebenen Harz.

Das vernetzte Material wird erhalten, indem das Harz entsprechend ausgehärtet wird, d.h. einer Vernetzung unterzogen wird. Bevorzugt werden Amino- oder Amidharze im sauren pH-Bereich vernetzt, während Phenolharze bevorzugt im alkalischen pH-Bereich vernetzt werden.

Gemäß eines weiteren Aspekts betrifft die vorliegende Erfindung ein Verfahren zur Herstellung von Glycolaldehyd oder Glycerinaldehyd in einer katalytischen Umpolungsreaktion, die folgende Schritte umfasst:
(i) Bereitstellung einer Reaktionslösung, die ein organisches Lösungsmittel, Formaldehyd und/oder Paraformaldehyd, und einen Katalysator enthält,
(ii) Erwärmen der Reaktionslösung unter Ausbildung des Glycolaldehyds oder Glycerinaldehyds,
(iii) in Kontakt bringen der Reaktionslösung mit einer wässrigen Phase.

Hinsichtlich der bevorzugten Merkmale dieses Syntheseverfahrens kann auf die obigen Ausführungen verwiesen werden.

Wie bereits oben beschrieben, wird der für die Harzherstellung verwendete Glycolaldehyd und/oder Glycerinaldehyd bevorzugt über dieses Syntheseverfahren hergestellt.

Anhand der nachfolgenden Beispiele wird die Erfindung eingehender erläutert.

### Beispiele

### Beispiel 1: Herstellung von Glycolaldehyd

1160,8 g Paraformaldehyd und 50 g Molsieb werden mit 2062,5 g Essigsäureethylester in einen 7,51 Druckreaktor vorgelegt und auf 70°C erwärmt. Dann werden 45 g Nitron (zuvor in 1432 g Essigsäureethylester gelöst) zudosiert.

Ferner werden zum Abfangen von Säure 3,2 g Kaliumcarbonat zugesetzt. Anschließend wird auf 80°C erwärmt. Die Reaktionslösung wird nach 1 Stunde Reaktionszeit aus dem Reaktor in eine Vorlage mit 1 kg Eis entleert und bei 10°C gerührt.

Die Essigsäureethylester-Phase wird wiederholt mit je 100 g Wasser ausgeschüttelt. Das Gewicht der vereinigten wässrigen Phasen beträgt 2304 g und der Gehalt an Hydroxy-Monoaldehyd in der wässrigen Phase liegt bei ca. 49%.

Die wässrige Phase enthält neben Glycolaldehyd auch noch Glycerinaldehyd. Das Verhältnis von Glycolaldehyd zu Glycerinaldehyd beträgt etwa 5:1. Bezogen auf den eingesetzten Formaldehyd beträgt die Ausbeute an Hydroxy-C₂₋₃-Monoaldehyd etwa 70 %.

Die wässrige Aldehydphase wird durch Zusatz von Essigsäure auf pH=5 eingestellt und so weiter stabilisiert. Die resultierende Aldehydlösung ist mehr als 3 Monate stabil.

### Beispiel 2: Harzsynthese (Glycolaldehydharz auf Basis von Melamin)

380 g der Glykolaldehydlösung (ca. 50%ig) nach Beispiel 1 werden mit 50%iger wässriger NaOH-Lösung bis pH 7,8 neutralisiert. Nach Zugabe von 84 g (0,66 Mol) Melamin wird unter kräftigem Rühren auf 60°C erwärmt und 1,5 Stunden bei dieser Temperatur gerührt. Hierbei löst sich das Melamin vollständig auf.

Das entstehende Harz ist bei Raumtemperatur länger als 3 Monate stabil.

### Beispiel 3: Glycolaldehyd/Glyoxal-Harz auf Basis von Melamin, Harz mit freien Aldehydgruppen

380 g der Glykolaldehydlösung (ca. 50%ig) nach Beispiel 1 werden mit 50%iger wässriger NaOH-Lösung bis pH 7 neutralisiert. Nach Zugabe von 126 g (1 Mol) Melamin wird unter kräftigem Rühren auf 60°C erwärmt und 1 Stunde bei dieser Temperatur gerührt (Suspension klart auf). Dann werden 54,38 g (0,375 Mol) 40%ige wässrige Glyoxallösung innerhalb von 30 Minuten bei 58°C zugetropft. Nach weiteren 5 Minuten wird auf Raumtemperatur abgekühlt.

Das Harz enthält freie Aldehydgruppen und ist bei Raumtemperatur länger als 1 Monat stabil. Durch die freien Aldehydgruppen wird bei der Härtung dieser Harze neben der Kondensations- auch eine Additionsreaktion ermöglicht, was die Reaktivität erhöht.

### Beispiel 4: Glycolaldehyd/Glyoxal-Harz auf Basis von Melamin, Harz mit freien Aldehydgruppen

Die Glykolaldehydlösung nach Beispiel 1 wird mit 50%iger wässriger NaOH-Lösung bis pH 7,3 neutralisiert. Nach Zugabe von 126 g (1 Mol) Melamin wird unter kräftigem Rühren auf 60°C erwärmt und 1,5 Stunden bei dieser Temperatur gerührt (Suspension klart auf). Dann werden 27,2 g (0,188 Mol) 40%ige wässrige Glyoxallösung innerhalb von 30 Minuten bei 58°C zugetropft. Nach weiteren 5 Minuten wird auf Raumtemperatur abgekühlt.

Das Harz enthält freie Aldehydgruppen und ist bei Raumtemperatur länger als 2 Monate stabil. Durch die freien Aldehydgruppen wird bei der Härtung dieser Harze neben der Kondensations- auch eine Additionsreaktion ermöglicht, was die Reaktivität erhöht.

## Patentansprüche

1. Ein Verfahren zur Herstellung eines Formaldehyd-freien Harzes, in dem ein Hydroxy-Monoaldehyd mit einem Amin, einem Amid oder einer aromatischen Hydroxyverbindung umgesetzt wird, wobei der Hydroxy-Monoaldehyd Glycolaldehyd oder Glycerinaldehyd oder ein Gemisch dieser Aldehyde ist.

2. Das Verfahren nach Anspruch 1, wobei das Amin oder Amid ein Aminotriazin, Harnstoff, ein Harnstoffderivat, Thioharnstoff, ein Thioharnstoffderivat, Iminoharnstoff, ein Iminoharnstoffderivat, ein Cyanamid, ein Diaminoalkan, ein Diamidoalkan, ein Polyacrylamid, ein pflanzliches oder tierisches Amin oder Amide, oder ein Gemisch von mindestens zwei dieser Verbindungen ist; oder die aromatische Hydroxyverbindung eine Phenolverbindung mit mindestens zwei Hydroxygruppen ist.

3. Das Verfahren nach einem der vorstehenden Ansprüche, wobei das aus der Umsetzung des Hydroxy-Monoaldehyds mit dem Amin, dem Amid oder der aromatischen Hydroxyverbindung erhaltene Produkt anschließend mit einem weiteren Aldehyd umgesetzt, wobei der Aldehyd ein Dialdehyd, ein Trialdehyd, ein Monoaldehyd wie Glyoxylsäure, oder ein Gemisch von mindestens zwei dieser Aldehyde ist.

4. Das Verfahren nach Anspruch 3, wobei der Dialdehyd Glyoxal oder ein Dialdehyd der Formel OHC-(CH₂)₁₋₃-CHO ist.

5. Das Verfahren nach Anspruch 3 oder 4, wobei das Amin oder Amid ein Triamin oder Triamid ist und das molare Verhältnis des Dialdehyds oder Trialdehyds zu den Amingruppen oder Amidgruppen im Bereich von 0,1/3 bis 5/3 liegt; oder das Amin oder Amid ein Diamin oder Diamid ist und das molare Verhältnis des Dialdehyds oder Trialdehyds zu den Amingruppen oder Amidgruppen im Bereich von 0,1/3,9 bis 3,9/0,1 liegt.

6. Das Verfahren nach einem der Ansprüche 3-5, wobei das Harz freie Aldehydgruppen aufweist.

7. Ein Verfahren zur Herstellung eines vernetzten Materials, umfassend
- die Bereitstellung eines Formaldehyd-freien Harzes nach einem der Ansprüche 1-6 und
- die Vernetzung des Harzes.

8. Ein Formaldehyd-freies Harz, erhältlich nach dem Verfahren gemäß einem der Ansprüche 1-6.

9. Das Formaldehyd-freie Harz nach Anspruch 8, enthaltend:
- Amingruppen oder Amidgruppen oder aromatische Ringe, an die Reste gebunden sind, die sich von der Umsetzung mit dem Glycolaldehyd oder Glycerinaldehyd ableiten,
- sowie Amingruppen oder Amidgruppen oder aromatische Ringe, an die Reste gebunden sind, die sich von der Umsetzung mit dem Dialdehyd oder Trialdehyd ableiten und bevorzugt freie Aldehydgruppen aufweisen.

10. Das Formaldehyd-freie Harz nach Anspruch 8 oder 9, einen Feststoffgehalt von mindestens 40 Gew% aufweisend.

11. Ein vernetztes Material, erhältlich aus dem Harz nach einem der Ansprüche 8-10 durch Vernetzung.

12. Ein Verfahren zur Herstellung von Glycolaldehyd oder Glycerinaldehyd in einer katalytischen Umpolungsreaktion, die folgenden Schritte umfassend:
(i) Bereitstellung einer Reaktionslösung, die ein organisches Lösungsmittel, Formaldehyd und/oder Paraformaldehyd, und einen Katalysator enthält,
(ii) Erwärmen der Reaktionslösung unter Ausbildung des Glycolaldehyds oder Glycerinaldehyds,
(iii) in Kontakt bringen der Reaktionslösung mit einer wässrigen Phase.

13. Das Verfahren nach Anspruch 12, wobei die Reaktionslösung einphasig ist; und/oder keine Erwärmung der Reaktionslösung durch eine äußere Heizquelle mehr stattfindet, wenn die Reaktionslösung in Schritt (iii) mit der wässrigen Phase in Kontakt gebracht wird.

## Claims

1. Process for producing a formaldehyde-free resin in which a hydroxymonoaldehyde is reacted with an amine, an amide or an aromatic hydroxyl compound, wherein the hydroxymonoaldehyde is glycolaldehyde or glycerolaldehyde or a mixture of these aldehydes.

2. Process according to Claim 1, wherein the amine or amide is an aminotriazine, urea, a urea derivative, thiourea, a thiourea derivative, iminourea, an iminourea derivative, a cyanamide, a diaminoalkane, a diamidoalkane, a polyacrylamide, a vegetable or animal amine or amide or a mixture of at least two of these compounds; or the aromatic hydroxyl compound is a phenol compound having at least two hydroxyl groups.

3. Process according to either of the preceding claims, wherein the product obtained from the reaction of the hydroxymonoaldehyde with the amine, the amide or the aromatic hydroxyl compound is subsequently reacted with a further aldehyde, wherein the aldehyde is a dialdehyde, a trialdehyde, a monoaldehyde such as glyoxylic acid or a mixture of at least two of these aldehydes.

4. Process according to Claim 3, wherein the dialdehyde is glyoxal or a dialdehyde of formula OHC-(CH2)₁₋₃-CHO.

5. Process according to Claim 3 or 4, wherein the amine or amide is a triamine or triamide and the molar ratio of the dialdehyde or trialdehyde to the amine groups or amide groups is in the range from 0.1:3 to 5:3; or the amine or amide is a diamine or diamide and the molar ratio of the dialdehyde or trialdehyde to the amine groups or amide groups is in the range from 0.1:3.9 to 3.9:0.1.

6. Process according to any of Claims 3-5, wherein the resin comprises free aldehyde groups.

7. Process for producing a crosslinked material, comprising
- the provision of a formaldehyde-free resin according to any of Claims 1-6 and
- the crosslinking of the resin.

8. Formaldehyde-free resin obtainable by the process according to any of Claims 1-6.

9. Formaldehyde-free resin according to Claim 8, containing:
- amine groups or amide groups or aromatic rings to which radicals derived from the reaction with the glycolaldehyde or glycerolaldehyde are bonded
- and amine groups or amide groups or aromatic rings to which radicals derived from the reaction with the dialdehyde or trialdehyde and preferably comprising free aldehyde groups are bonded.

10. Formaldehyde-free resin according to Claim 8 or 9 having a solids content of at least 40% by weight.

11. Crosslinked material obtainable from the resin according to any of Claims 8-10 by crosslinking.

12. Process for producing glycolaldehyde or glycerolaldehyde in a catalytic umpolung reaction comprising the steps of:
(i) providing a reaction solution containing an organic solvent, formaldehyde and/or paraformaldehyde and a catalyst,
(ii) heating the reaction solution to form the glycolaldehyde or glycerolaldehyde,
(iii) contacting the reaction solution with an aqueous phase.

13. Process according to Claim 12, wherein the reaction solution is monophasic; and/or heating of the reaction solution by an external heating source no longer takes place when the reaction solution is contacted with the aqueous phase in step (iii).

## Revendications

1. Procédé pour la préparation d'une résine exempte de formaldéhyde, dans lequel un hydroxymonoaldéhyde est transformé avec une amine, un amide ou un composé aromatique à fonction hydroxy l'hydroxymonoaldéhyde étant le glycolaldéhyde ou le glycérolaldéhyde ou un mélange de ces aldéhydes.

2. Procédé selon la revendication 1, l'amine ou l'amide étant une aminotriazine, l'urée, un dérivé d'urée, la thio-urée, un dérivé de thio-urée, l'imino-urée, un dérivé d'imino-urée, un cyanamide, un diaminoalcane, un diamidoalcane, un polyacrylamide, une amine ou un amide végétal(e) ou animal(e) ou un mélange d'au moins deux de ces composés ; ou le composé hydroxy aromatique étant un composé de type phénol présentant au moins deux groupes hydroxy.

3. Procédé selon l'une quelconque des revendications précédentes, le produit obtenu par la transformation de l'hydroxymonoaldéhyde avec l'amine, l'amide ou le composé aromatique à fonction hydroxy étant ensuite transformé avec un autre aldéhyde, l'aldéhyde étant un dialdéhyde, un trialdéhyde, un monoaldéhyde tel que l'acide glyoxylique ou un mélange d'au moins deux de ces aldéhydes.

4. Procédé selon la revendication 3, le dialdéhyde étant le glyoxal ou un dialdéhyde de formule OHC-(CH₂)₁₋₃-CHO.

5. Procédé selon la revendication 3 ou 4, l'amine ou l'amide étant une triamine ou un triamide et le rapport molaire du dialdéhyde ou du trialdéhyde aux groupes amine ou amide se situant dans la plage de 0,1/3 à 5/3 ; ou l'amine ou l'amide étant une diamine ou un diamide et le rapport molaire du dialdéhyde ou du trialdéhyde aux groupes amine ou amide se situant dans la plage de 0,1/3,9 à 3,9/0,1.

6. Procédé selon l'une quelconque des revendications 3-5, la résine présentant des groupes aldéhyde libres.

7. Procédé pour la préparation d'un matériau réticulé, comprenant
- la préparation d'une résine exempte de formaldéhyde selon l'une quelconque des revendications 1-6 et
- la réticulation de la résine.

8. Résine exempte de formaldéhyde pouvant être obtenue selon le procédé selon l'une quelconque des revendications 1-6.

9. Résine exempte de formaldéhyde selon la revendication 8, contenant :
- des groupes amine ou des groupes amide ou des cycles aromatiques auxquels sont liés les radicaux qui sont dérivés de la transformation avec le glycolaldéhyde ou le glycérolaldéhyde,
- ainsi que des groupes amine ou des groupes amide ou des cycles aromatiques auxquels sont liés les radicaux qui sont dérivés de la transformation avec le dialdéhyde ou le trialdéhyde et qui présentent de préférence des groupes aldéhyde libres.

10. Résine exempte de formaldéhyde selon la revendication 8 ou 9, présentant une teneur en solides d'au moins 40% en poids.

11. Matériau réticulé, pouvant être obtenu à partir de la résine selon l'une quelconque des revendications 8-10 par réticulation.

12. Procédé pour la préparation de glycolaldéhyde ou de glycérolaldéhyde dans une réaction d'inversion de polarité catalytique, comprenant les étapes suivantes :
(i) préparation d'une solution réactionnelle, qui contient un solvant organique, du formaldéhyde et/ou du paraformaldéhyde et un catalyseur,
(ii) chauffage de la solution réactionnelle avec formation du glycolaldéhyde ou du glycérolaldéhyde,
(iii) mise en contact de la solution réactionnelle avec une phase aqueuse.

13. Procédé selon la revendication 12, la solution réactionnelle étant à une seule phase ; et/ou aucun chauffage de la solution réactionnelle par une source de chaleur externe n'ayant plus lieu lorsque la solution réactionnelle est mise en contact dans l'étape (iii) avec la phase aqueuse.
